# EUROPÄISCHE PATENTANMELDUNG

(11) **EP 1 953 928 A1**
(43) Veröffentlichungstag der Anmeldung: **06.08.2008**
(21) Anmeldenummer: 07002130.8
(22) Anmeldetag: 31.01.2007
(51) Int. Cl.: H04B 7/26, H04L 5/02

(54) **Verfahren zur Steuerung einer Signalübertragung in Aufwärtsrichtung in einem Funk-Kommunikationssystem**

(71) Anmelder: Nokia Siemens Networks GmbH & Co. KG, 81541 München (DE)
(72) Erfinder: Fehringer, Manfred, 3300 Winklarn-Haagdorf (AT); Stadler, Thomas, 1130 Wien (AT); Unteregger, Burghard, 1040 Wien (AT)

(57) **Zusammenfassung**

Nach dem erfindungsgemäßen Verfahren zur Übertragung von Steuerungssignalisierungen und Nutzdaten in Aufwärtsrichtung von einem Teilnehmerendgerät zu einer Basisstation in einer Anzahl von Unterfrequenzbändern eines Frequenzbandes in einem Funk-Kommunikationssystem, werden die Steuerungssignalisierungen abhängig von einer für die Übertragung von Nutzdaten zugewiesenen Anzahl Ressourceneinheiten, welche aus einer Mehrzahl von Unterfrequenzbändern und einer Anzahl von Zeitschlitzen eines Zeitrahmens bestehen, in zumindest einem zu der zugewiesenen Anzahl Zeitschlitze für die Übertragung von Nutzdaten disjunkten Zeitschlitz des Zeitrahmens oder in zumindest einem Teil der für die Übertragung von Nutzdaten zugewiesenen Anzahl Ressourceneinheiten übertragen.

## Beschreibung

Die Erfindung betrifft ein Verfahren zur Steuerung einer Signalübertragung, insbesondere von Steuerungssignalisierungen und Nutzdaten, in Aufwärtsrichtung in einem Funk-Kommunikationssystem. Bevorzugt wird das erfindungsgemäße Verfahren in Weiterentwicklungen des UMTS-Standards eingesetzt.

Für die im Rahmen der 3GPP (3rd Generation Partnership Project) standardisierte Weiterentwicklung des UMTS-Standards (Universal Mobile Telecommunication System), als Evolved Universal Terrestrial Radio Access (E-UTRA) oder LTE (Long Term Evolution) bezeichnet, ist zur Unterstützung höherer Übertragungsraten vorgesehen, in breitbandigen Frequenzbändern von aktuell bis zu 20 MHz ein OFDMA-Verfahren (OFDMA - Orthogonal Frequency Division Multiplex Access) für die Zuweisung von physikalischen Ressourcen zu einer Vielzahl von Verbindungen bzw. Teilnehmerendgeräten einzusetzen. Dabei wird das OFDMA-Verfahren nach aktuellem Status der Standardisierung lediglich für Signal- bzw. Datenübertragungen in Abwärtsrichtung (engl. Downlink, DL), d.h. auf der Funkschnittstelle von einer Basisstation (engl. eNode B, NB) des Systems zu einer Vielzahl von Teilnehmerendgeräten (engl. User Equipment, UE), eingesetzt, während für Signal- bzw. Datenübertragungen in Aufwärtsrichtung (engl. Uplink, UL) ein so genanntes SC-FDMA-Verfahren (SC-FDMA - Single Carrier-Frequency Division Multiple Access) Verwendung findet.

Eine Übertragung von Daten auf der Funkschnittstelle zwischen einer Basisstation und Teilnehmerendgeräten erfolgt dabei in so genannten Ressourceneinheiten (engl. Resource Unit, RU). Eine Ressourceneinheit, auch als Chunk bezeichnet, wird nach aktuellen Status der Standardisierung als eine Kombination aus einem Zeitraum von 1 ms, auch als Zeitschlitz (engl. Time Slot, ts) oder Übertragungszeitintervall (engl. Transmission Time Interval, TTI) bezeichnet, und einer Bandbreite von 12 Unterfrequenzbändern bzw. Trägerfrequenzen mit einem jeweiligen Trägerfrequenzabstand von 15 kHz definiert. Ein Zeitschlitz bzw. TTI besteht dabei aus zwei so genannten Unterrahmen (engl. Subframe) mit einer Länge von jeweils 0,5 ms, wobei 20 Unterrahmen einen so genannten Zeitrahmen (engl. Time Frame) mit einer entsprechenden Länge von 10 ms bilden. Abhängig von einer gewählten Modulation lassen sich in einer Ressourceneinheit in Aufwärtsrichtung 288 bzw. 576 Bits, und in Abwärtsrichtung 288, 576 oder 864 Bits übertragen. Die Zuweisung solcher Ressourceneinheiten sowohl in der Aufwärtsrichtung als auch in der Abwärtsrichtung obliegt dabei einem so genannten Scheduler in der Basisstation.

Für die Aufrechterhaltung einer bestimmten Qualität einer Verbindung bei der Übertragung von Nutzdaten (unter denen nachfolgend so genannte User-Plane-Daten, beispielsweise Sprachdaten, verstanden werden) in Abwärtsrichtung von der Basisstation zu einem Teilnehmerendgerät muss dieses vorzugsweise in regelmäßigen Abständen Informationen über eine aktuell ermittelte Qualität des Kanals zu der Basisstation signalisieren. Die Qualität wird dabei anhand von von der Basisstation auf den einzelnen Unterfrequenzbändern gesendeten Referenzsignalen, beispielsweise mittels einer so genannten Kanalschätzung (engl. Channel Estimation), bestimmt. Auf Basis dieser von dem Teilnehmerendgerät signalisierten Informationen passt die Basisstation Übertragungsparameter, beispielsweise die Modulation, Kodierung oder auch die Ressourcenzuweisung, d.h. die Zuweisung geeigneter Unterfrequenzbänder zu Funkverbindungen, für nachfolgende Übertragungen in Abwärtsrichtung an.

Derartige Informationen sind beispielsweise so genannte Kanalqualitätsindikatoren (engl. Channel Quality Indicator, CQI), welche von einem Teilnehmerendgerät auch für ihm aktuell nicht zugewiesene Unterfrequenzbänder aus von der Basisstation auf allen oder einer Mehrzahl über das gesamte Frequenzband äquidistant verteilten Unterfrequenzbändern periodisch gesendeten Referenzsignalen abgeleitet werden können. Sie sollten periodisch von dem Teilnehmerendgerät signalisiert werden, unabhängig davon, ob aktuell von der Basisstation Nutzdaten zu dem Teilnehmerendgerät oder umgekehrt übertragen werden.

Derartige Informationen können jedoch ebenfalls beispielsweise positive bzw. negative Bestätigungssignalisierungen (ACK/NACK) sein, welche im Rahmen eines so genannten ARQ-Protokolls (Automatic Repeat Request) ausgetauscht werden. Bestätigungssignalisierungen eines ARQ-Protokolls werden von einem Teilnehmerendgerät in der Regel nur zu empfangenen Nutzdaten in den zugewiesenen Unterfrequenzbändern bzw. Ressourceneinheiten generiert und zu der Basisstation signalisiert.

Weiterhin werden von dem Teilnehmerendgerät so genannte Ressourcenanforderungen (engl. Resource Request, RR) zu der versorgenden Basisstation signalisiert, mit denen es bei Vorliegen von in Aufwärtsrichtung zu übertragenden Nutzdaten die Zuweisung von Ressourceneinheiten durch den so genannten Scheduler, einer Ressourcenzuweisungseinrichtung in der Basisstation oder einer übergeordneten Komponente des Systems, anfordert.

Die vorstehenden Informationen und Anforderungen sowie weitere denkbare Informationstypen, nachfolgend unter dem Begriff Steuerungssignalisierungen (engl. Control Signalling) subsummiert, des Teilnehmerendgerätes können, angelehnt an dem ISO/OSI-Schichtenmodell, sowohl auf den Schichten 1 bzw. 2 als auch auf den Schichten 2 bzw. 3 übertragen werden. Im Folgenden wird ausschließlich die Schicht-1- bzw. -2-Übertragung betrachtet. Insbesondere für die Schicht-1- bzw. -2-Übertragung von Steuerungssignalisierungen können dabei im Vergleich zu bei der Übertragung von Nutzdaten verwendeten Signalen unterschiedliche physikalische Signale definiert werden. Dies kann zum einen durch die in der Regel deutlich geringere zu übertragende Informationsmenge, gegebenenfalls nur einige Bits, für die entsprechend eine geringere Menge Funkressourcen benötigt wird, zum anderen durch unterschiedliche Anforderungen an den Fehlerschutz bedingt sein. Bei der Übertragung von Nutzdaten können auftretende Fehler beispielsweise über Protokolle auf höheren Schichten, beispielhaft sei das ARQ-Protokoll auf der Schicht 2 genannt, beseitigt werden, währenddessen für Steuerungssignalisierungen derartige Verfahren üblicherweise nicht angewendet werden.

In dem Dokument R1-0636133 "Approved Report of 3GPP TSG RAN WG1 #46bis", 3GPP TSG RAN WG1 Meeting #47, Riga, Latvia, 06-10 November, 2006, wird vorgeschlagen, dass bei Zuweisung von Ressourceneinheiten für die Nutzdatenübertragung in Aufwärtsrichtung immer eine so genannte Inband-Signalisierung verwendet wird, wobei Inband-Signalisierung bedeutet, dass Steuerungssignalisierungen in den Nutzdatenstrom gemultiplext, gemeinsam moduliert und auf der physikalischen Schicht übertragen werden. Dies kann neben einem größeren Aufwand bei der Generierung der Signale jedoch dazu führen, dass auch Nutzdaten, die gemeinsam mit Steuerungssignalen, beispielsweise als Teil eines Symbols, auf der physikalischen Schicht übertragen werden, den vergleichsweise höheren Fehlerschutz der Steuerungssignalisierungen aufweisen müssten, um mit der gleichen Fehlerwahrscheinlichkeit empfangen werden zu können. Im gegenteiligen Fall kann dies hingegen auch zur Folge haben, dass die Steuerungssignalisierungen an dem vergleichsweise geringen Fehlerschutz der Nutzdaten orientiert übertragen werden. Der Fehlerschutz ist für Steuerungssignalisierungen allgemein nach anderen Maßstäben als für Nutzdaten dimensioniert, da Nutzdaten eine angenommene bestimmte prozentuale Fehlerwahrscheinlichkeit über ergänzende Fehlerkorrekturmechanismen in übergeordneten Protokollen ausgleichen, währenddessen für Steuerungssignalisierungen keine ergänzenden Sicherungsmechanismen zur Erhöhung der Detektionssicherheit existieren.

Aufgabe der Erfindung ist es, ein Verfahren sowie Komponenten eines Funk-Kommunikationssystems anzugeben, welche eine effiziente Übertragung von Steuerungssignalisierungen und Nutzdaten in Aufwärtsrichtung ermöglichen. Diese Aufgabe wird durch die Merkmale der unabhängigen Patentansprüche gelöst. Vorteilhafte Weiterbildungen der Erfindung sind Gegenstand abhängiger Patentansprüche.

Erfindungsgemäß wird ein Verfahren zur Übertragung von Steuerungssignalisierungen und Nutzdaten in Aufwärtsrichtung von einem Teilnehmerendgerät zu einer Basisstation in einer Anzahl von Unterfrequenzbändern eines Frequenzbandes in einem Funk-Kommunikationssystem beansprucht, bei dem die Steuerungssignalisierungen abhängig von einer für die Übertragung von Nutzdaten zugewiesenen Anzahl Ressourceneinheiten, welche aus einer Mehrzahl von Unterfrequenzbändern und einer Anzahl von Zeitschlitzen eines Zeitrahmens bestehen, in zumindest einem zu der zugewiesenen Anzahl Zeitschlitze für die Übertragung von Nutzdaten disjunkten Zeitschlitz des Zeitrahmens oder in zumindest einem Teil der für die Übertragung von Nutzdaten zugewiesenen Anzahl Ressourceneinheiten übertragen werden.

Entgegen der einleitend beschriebenen ausschließlichen Übertragung von Steuerungssignalisierungen in Form einer so genannten Inband-Signalisierung bei Vorliegen einer Nutzdatenübertragung und den damit verbundenen Nachteilen, wird erfindungsgemäß auch eine so genannte Außenband-Signalisierung in Aufwärtsrichtung in zumindest einem disjunkten Zeitschlitz eines Zeitrahmens ermöglicht, selbst wenn dem Teilnehmerendgerät Ressourceneinheiten für eine Nutzdatenübertragung in Aufwärtsrichtung zugewiesen sind. Insbesondere aufgrund der einleitend beschriebenen unterschiedlichen Anforderungen an die Übertragung von Nutzdaten und Steuerungssignalisierungen wird seitens der Basisstation angestrebt, diese möglichst in disjunkten Ressourcen, d.h. nach Zeit und gegebenenfalls Frequenz getrennt, von dem Teilnehmerendgerät übertragen zu lassen. Die Basisstation versucht somit abhängig vom Bedarf des Teilnehmerendgerätes an Ressourceneinheiten für eine Nutzdatenübertragung in Aufwärtsrichtung die Nutzdaten und Steuerungssignalisierungen nach Zeitschlitzen sowie gegebenenfalls Trägerfrequenzen zu multiplexen. Erst wenn ein zeitliches Multiplexen dieser Übertragungen nicht mehr möglich ist, wird ein Wechsel von der Außenband-Signalisierung zu einer Inband-Signalisierung durch die Basisstation herbeigeführt.

Gemäß einer ersten Weiterbildung des Verfahrens werden die Steuerungssignalisierungen für den Fall der Übertragung in dem zumindest einen disjunkten Zeitschlitz in zumindest einem von der Mehrzahl Unterfrequenzbänder der zugewiesenen Anzahl Ressourceneinheiten für die Übertragung von Nutzdaten disjunkten Unterfrequenzband des Frequenzbandes und/oder in zumindest einem Teil der Mehrzahl Unterfrequenzbänder der zugewiesenen Anzahl Ressourceneinheiten für die Übertragung der Nutzdaten übertragen.

Durch eine Nutzung zumindest eines disjunkten Unterfrequenzbandes nach der ersten Alternative dieser Weiterbildung können für die Übertragung von Steuerungssignalisierungen vorteilhaft Ressourcen verwendet werden, die beispielsweise auch genutzt werden, wenn dem Teilnehmerendgerät in dem Zeitrahmen keine Ressourceneinheiten für die Übertragung von Nutzdaten in Aufwärtsrichtung zugewiesen sind, eine Übertragung von Steuerungssignalisierungen in dem Zeitrahmen jedoch erforderlich ist. Gemäß der zweiten Alternative dieser Weiterbildung wird hingegen zumindest ein Teil der für die Nutzdatenübertragung zugewiesenen Unterfrequenzbänder genutzt, sodass das Teilnehmerendgerät bei einem Wechsel zwischen Nutzdaten- und Steuerungssignalisierungsübertragungen vorteilhaft keine Frequenzsprünge durchführen muss. Gemäß einer dritten Alternative ist weiterhin eine Nutzung sowohl für die Nutzdatenübertragung zugewiesener Unterfrequenzbänder als auch disjunkter Unterfrequenzbänder möglich. Hierbei werden beispielsweise über das gesamte verfügbare Frequenzband verteilt Steuerungssignalisierungen übertragen. Vorteilhaft kann die empfangende Basisstation diese Signalisierungen für eine Auswahl geeigneter Unterfrequenzbänder für nachfolgende Übertragungen von Nutzdaten verwenden.

Gemäß einer zweiten Weiterbildung des Verfahrens wird für die Übertragung der Steuerungssignalisierungen sowohl die Zuweisung von Ressourceneinheiten für die Übertragung in Aufwärtsrichtung als auch für die Abwärtsrichtung berücksichtigt.

Gemäß einer dritten Weiterbildung des Verfahrens erfolgt die Zuweisung von Ressourceneinheiten für die Übertragung von Nutzdaten in Abwärtsrichtung und/oder Aufwärtsrichtung derart, dass die zeitlich disjunkte Übertragung der Steuerungssignalisierungen ermöglicht wird, d.h. bevorzugt zur Anwendung kommt. Ziel der Ressourcenzuweisung kann es dabei sein, auch bei einer großen Anzahl für die Nutzdatenübertragung zugewiesener Ressourceneinheiten eine zeitlich disjunkte Übertragung von Steuerungssignalisierungen zu ermöglichen. Dies kann beispielsweise über eine zusätzliche Nutzung von Ressourceneinheiten mit unterschiedlichen Unterfrequenzbändernerfolgen.

Gemäß einer vierten Weiterbildung des Verfahrens werden die Steuerungssignalisierungen zumindest für die Übertragung von Bestätigungssignalisierungen in Aufwärtsrichtung für von der Basisstation empfangenen Nutzdaten verwendet werden. Dies kann beispielsweise im Sinne eines einleitend genannten ARQ-Protokolls erfolgen.

Eine erfindungsgemäße Basisstation eines Funk-Kommunikationssystems weist zumindest eine Einrichtung auf zum Zuweisen einer Anzahl Ressourceneinheiten, welche aus einer Mehrzahl von Unterfrequenzbändern und einer Anzahl von Zeitschlitzen eines Zeitrahmens bestehen, für eine Übertragung von Nutzdaten und zum Zuweisen zumindest eines zu der zugewiesenen Anzahl Zeitschlitze für die Übertragung von Nutzdaten disjunkten Zeitschlitz des Zeitrahmens oder zumindest eines Teils der für die Übertragung von Nutzdaten zugewiesenen Anzahl Ressourceneinheiten für eine Übertragung von Steuerungssignalisierungen abhängig von einer für die Übertragung von Nutzdaten zugewiesenen Anzahl Ressourceneinheiten, sowie eine Einrichtung zum Senden der Zuweisung zu dem Teilnehmerendgerät und zum Empfangen von dem Teilnehmerendgerät in Aufwärtsrichtung gesendeter Steuerungssignalisierungen und Nutzdaten.

Ein erfindungsgemäßes Teilnehmerendgerät weist zumindest eine Einrichtung auf zum Empfangen einer von einer Basisstation eines Funk-Kommunikationssystems signalisierten Zuweisung einer Anzahl Ressourceneinheiten, welche aus einer Mehrzahl von Unterfrequenzbändern und einer Anzahl von Zeitschlitzen eines Zeitrahmens bestehen, für eine Übertragung von Nutzdaten und zumindest eines zu der zugewiesenen Anzahl Zeitschlitze für die Übertragung von Nutzdaten disjunkten Zeitschlitz des Zeitrahmens oder zumindest eines Teils der für die Übertragung von Nutzdaten zugewiesenen Anzahl Ressourceneinheiten für eine Übertragung von Steuerungssignalisierungen, wobei die Basisstation eine Wahl der Ressourcen für die Übertragung von Steuerungssignalisierungen abhängig von einer für die Übertragung von Nutzdaten zugewiesenen Anzahl Ressourceneinheiten trifft, eine Einrichtung zum Auswerten der empfangenen Zuweisungen sowie eine Einrichtung zum Senden von Steuerungssignalisierungen und Nutzdaten in Aufwärtsrichtung zu der Basisstation in den zugewiesenen Ressourcen.

Die erfindungsgemäße Basisstation sowie das Teilnehmerendgerät können ergänzend weitere oder entsprechend ausgestaltete Mittel zum Durchführen der Verfahren nach vorstehend beschriebenen Weiterbildungen des erfindungsgemäßen Verfahrens aufweisen.

Die Erfindung wird nachfolgend anhand eines Ausführungsbeispiels näher dargestellt. Dabei zeigen
- FIG 1: eine beispielhafte Struktur eines Funk-Kommunikationssystems,
- FIG 2: erste beispielhafte Zuweisungen von Übertragungsressourcen für die Übertragung von Nutzdaten und Steuerungssignalisierungen in Aufwärtsrichtung,
- FIG 3: zweite beispielhafte Zuweisungen von Übertragungsressourcen für die Übertragung von Nutzdaten und Steuerungssignalisierungen in Aufwärts- und Abwärtsrichtung, und
- FIG 4: ein Ablaufdiagramm eines Zuweisungs- und Übertragungsverfahrens.

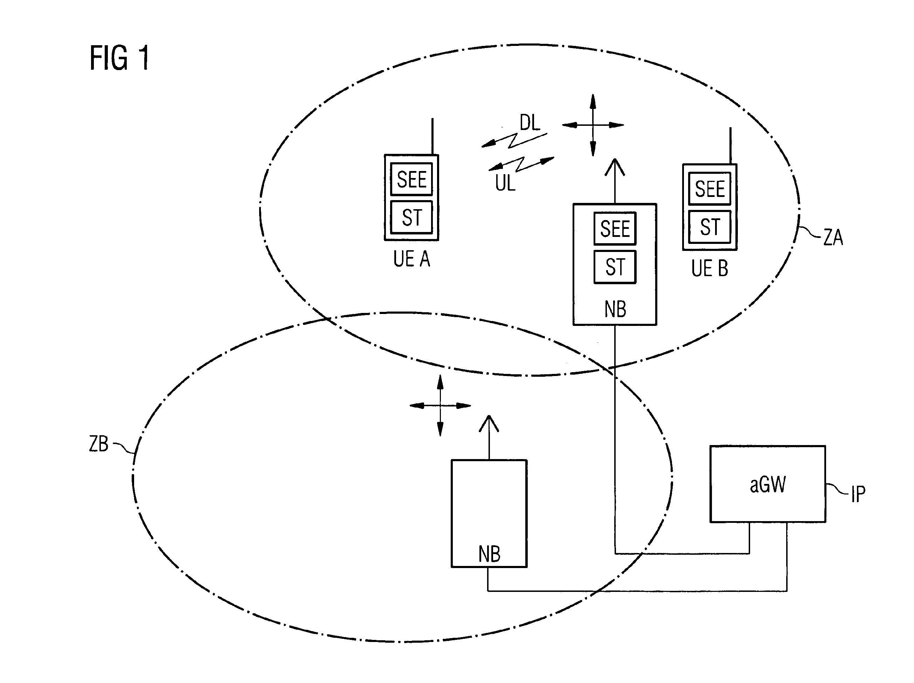

In FIG 1 ist die Struktur eines Funk-Kommunikationssystems, insbesondere nach dem aktuellen Stand der E-UTRA- bzw. UMTS-LTE-Standardisierung, beispielhaft dargestellt. Ein so genannter Zugangsnetzübergang aGW (Access Gateway) steht mit weiteren Komponenten des Systems bzw. anderen Systemen über ein IP-basiertes (IP - Internet Protocol) Netzwerk in Verbindung. Mit diesem Netzwerk tauscht der Zugangsnetzübergang aGW Datenverkehr in Form von Datenpaketen aus. Der Zugangsnetzübergang aGW ist weiterhin mit einer Vielzahl Basisstationen NB (Node B) verbunden, welche jeweils zumindest eine Funkzelle ZA bzw. ZB mit funktechnischen Ressourcen versorgen. Die beispielhaft dargestellten Basisstationen NB sind wiederum über eine Funkschnittstelle mit Teilnehmerendgeräten UE A, UE B verbunden. Auf der Funkschnittstelle werden Signale in Aufwärtsrichtung UL (Uplink) und Abwärtsrichtung DL (Downlink) übertragen. Die Basisstationen NB sowie die Teilnehmerendgeräte UE A, UE B weisen zur Unterstützung des erfindungsgemäßen Verfahrens jeweils zumindest eine Sende-/Empfangseinrichtung SEE zum Senden und Empfangen von Signalen, insbesondere von Steuerungssignalisierungen und Nutzdaten, sowie jeweils eine Steuereinrichtung ST insbesondere zum Steuern der Sende-/Empfangseinrichtungen SEE in der Basisstation NB bzw. der Teilnehmerendgeräte UE A, UE B auf. In der Basisstation NB übernimmt die Steuereinrichtung ST zudem die Aufgabe der Zuweisung von Übertragungsressourcen für Nutzdaten- und Steuerungssignalisierungsübertragungen in Aufwärtsrichtung UL und Abwärtsrichtung DL im Sinne eines so genannten Schedulers.

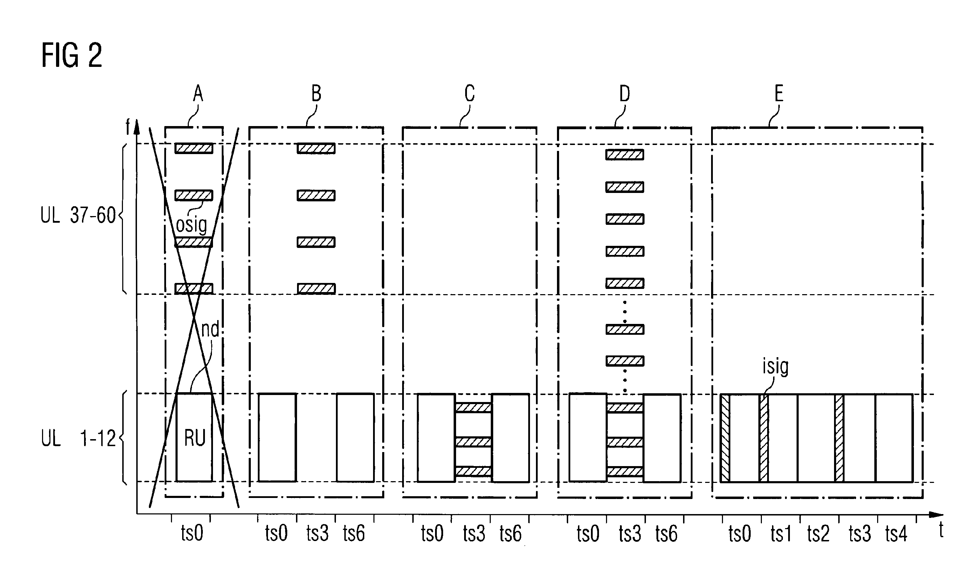

In FIG 2 sind mehrere beispielhafte Zuweisungen von Ressourcen nach Zeit t und Frequenz f aufgetragen. Basierend auf der einleitend beschriebenen Struktur der Funkschnittstelle nach dem aktuellen Stand der E-UTRA- bzw. UMTS-LTE-Standardisierung wird eine Ressourceneinheit RU (engl. Resource Unit) als eine Kombination von 12 Unterfrequenzbändern 1...12 und einem Zeitschlitz ts (engl. Time Slot) eines aus einer Mehrzahl Zeitschlitzen bestehenden Zeitrahmens angenommen. Ferner sei angenommen, dass einem Teilnehmerendgerät UE für eine Übertragung von Nutzdaten nd jeweils eine ganzzahlige Menge Ressourceneinheiten RU zugewiesen wird. Neben den für Ressourceneinheiten RU verwendbaren Unterfrequenzbänder 1...12 stehen beispielhaft weitere Unterfrequenzbänder 37...60 zur Verwendung für die Übertragung von Steuerungssignalisierungen osig zur Verfügung.

Eine erste beispielhafte Zuweisung A in FIG 2 stellt eine von einem Teilnehmerendgerät UE in der Regel nicht unterstützte Zuweisung dar, und ist daher durchgestrichen. Nach diesem Beispiel sind dem Teilnehmerendgerät UE in einem ersten Zeitschlitz ts0 sowohl eine Ressourceneinheit RU für die Übertragung von Nutzdaten nd als auch Ressourcen, beispielhaft vier äquidistant angeordnete der Unterfrequenzbänder 37...60, für die Übertragung von Steuerungssignalisierungen osig zugewiesen. Eine Zuweisung von zu den Unterfrequenzbändern für die Nutzdatenübertragung disjunkten Unterfrequenzbändern kann insbesondere auch dann erfolgen, wenn in einem Zeitrahmen keinerlei Ressourceneinheiten dem Teilnehmerendgerät für eine Nutzdatenübertragung zugewiesen werden, da bestimmte Signalisierungen, beispielsweise die einleitend genannten CQI-Berichte, gegebenenfalls zumindest einmal alle zwei Zeitrahmen, von dem Teilnehmerendgerät zu der Basisstation regelmäßig signalisiert werden müssen.

Eine zweite beispielhafte Zuweisung B stellt drei Zeitschlitze ts0, ts3, ts6 eines Zeitrahmens dar, wobei dem Teilnehmerendgerät UE in dem ersten ts0 und dritten dargestellten Zeitschlitz ts2 jeweils eine Ressourceneinheit RU für die Übertragung von Nutzdaten nd zugewiesen ist, während in dem zweiten Zeitschlitz ts3 eine Übertragung von Steuerungssignalisierungen osig entsprechend der Zuweisung A erfolgt. Diese Zuweisung beinhaltet neben einer zeitlichen Disjunktheit der Übertragungen von Nutzdaten und Steuerungssignalisierungen in Aufwärtsrichtung UL auch eine Disjunktheit im Frequenzbereich, d.h. Nutzdaten und Steuerungssignalisierungen nutzen unterschiedliche Unterfrequenzbänder. Bei einem Wechsel zwischen unterschiedlichen Frequenzbändern, wir er zwischen den Zeitschlitzen in der Zuweisung B erforderlich ist, ist ein übertragungsfreier Zeitraum vorzusehen, der nach dem Beispiel eine Länge von zwei Zeitschlitzen aufweist. Allgemein wird eine zeitlich und/oder im Frequenzbereich getrennte Übertragung von Steuerungssignalisierungen in Fachkreisen auch als Außenband-Signalisierung im Gegensatz zu einer so genannten Inband-Signalisierung, wie sie nachfolgend noch zur beispielhaften Zuweisung D beschrieben wird, bezeichnet.

Auch eine dritte beispielhafte Zuweisung C stellt eine Folge von drei Zeitschlitzen ts0, ts3, ts6 eines Zeitrahmens dar, wobei entgegen der Zuweisung B in dem zweiten Zeitschlitz ts3 Unterfrequenzbänder für die Übertragung von Steuerungssignalisierungen verwendet werden, die in dem vorstehenden und nachfolgenden Zeitschlitz ts0 bzw. ts6 von Ressourceneinheiten RU für die Übertragung von Nutzdaten verwendet werden. Diese Zuweisung beinhaltet also lediglich eine zeitliche Disjunktheit der Übertragungen von Nutzdaten und Steuerungssignalisierungen in Aufwärtsrichtung UL, jedoch keine Disjunktheit im Frequenzbereich. Auch diese Übertragung von Steuerungssignalisierungen wird in Fachkreisen als Außenband-Signalisierung bezeichnet.

Eine vierte beispielhafte Zuweisung D stellt wiederum eine Folge von drei Zeitschlitzen ts0, ts3, ts5 eines Zeitrahmens dar, wobei eine Übertragung von Steuerungssignalisierungen in dem zweiten Zeitschlitz ts3 auf dem gesamten, durch die Unterfrequenzbänder 1 bis 60 definierten Frequenzband in äquidistanten Unterfrequenzbändern erfolgt. Ergänzend können dabei beispielsweise noch weitere, nicht dargestellte, Unterfrequenzbänder des dem System zur Verfügung stehenden Frequenzbandes genutzt werden. Eine derartige Verteilung über das gesamte Frequenzband ermöglicht eine empfängerseitige Evaluierung der Übertragungsverhältnisse über die gesamte Bandbreite, deren Ergebnisse für eine Definition und Zuweisung von Ressourceneinheiten für die nachfolgende Übertragung von Nutzdaten verwendet werden können.

Die fünfte beispielhafte Zuweisung E betrachtet nun die Situation, dass dem Teilnehmerendgerät UE in allen aufeinander folgenden Zeitschlitzen ts0...ts4 eines Zeitrahmens Ressourceneinheiten RU für die Übertragung von Nutzdaten nd in Aufwärtsrichtung UL zugewiesen sind. In diesem Fall ist die Basisstation beispielsweise nicht mehr in der Lage, zeitlich disjunkte Ressourcen für die Übertragung von Steuerungssignalisierungen dem Teilnehmerendgerät zuzuweisen. Daher wird die Übertragung der Steuerungssignalisierungen von einer Außenband-Signalisierung zu einer Inband-Signalisierung verändert, d.h. die Steuerungssignale isig werden gemeinsam mit Nutzdaten in den zugewiesenen Ressourceneinheiten übertragen. Die Steuerungssignale werden dabei beispielsweise über die gesamte Frequenzbreite einer Ressourceneinheit verschmiert und den Nutzdaten überlagert übertragen.

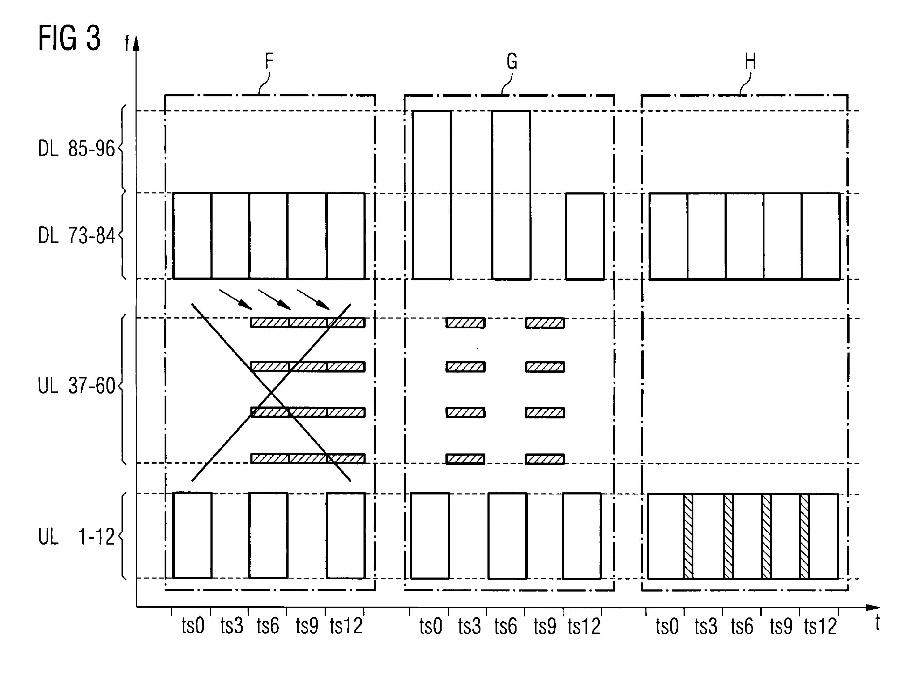

In FIG 3 sind mehrere beispielhafte Zuweisungen von Ressourcen nach Zeit t und Frequenz f entsprechend der FIG 2 aufgetragen, wobei neben der Zuweisung von Ressourcen für die Übertragung in Aufwärtsrichtung UL auch die Zuweisung von Ressourcen für die Übertragung in Abwärtsrichtung DL dargestellt ist. So stehen für Übertragungen in Abwärtsrichtung DL beispielsweise die Unterfrequenzbänder 73...84 sowie 85...96 zur Nutzung durch Ressourceneinheiten RU, bestehend wiederum aus jeweils 12 Unterfrequenzbändern und einem Zeitschlitz, zur Verfügung.

Die sechste beispielhafte Zuweisung F zeigt wiederum eine Zuweisung, die von dem Teilnehmerendgerät UE nicht unterstützt werden kann. Es sei angenommen, dass von der Basisstation NB in jedem der dargestellten Zeitschlitze ts0...ts15 sowie gegebenenfalls in weiteren zwischen diesen liegenden Zeitschlitzen eines Zeitrahmens Nutzdaten in Ressourceneinheiten in Abwärtsrichtung DL zu dem Teilnehmerendgerät UE übertragen werden. Diese Nutzdaten müssen von dem Teilnehmerendgerät UE jedoch gemäß einem ARQ-Protokoll bezüglich ihres Empfangs jeweils innerhalb eines bestimmten Zeitraumes bestätigt werden. Das Teilnehmerendgerät UE müsste nach dem ARQ-Protokoll beispielsweise nach jeder empfangenen Ressourceneinheit in einem jeweils mit einem Abstand von zwei Zeitschlitzen auf eine empfangene Ressourceneinheit folgenden Zeitschlitz eine Bestätigung in Aufwärtsrichtung UL zu der Basisstation NB signalisieren. Da dem Teilnehmerendgerät UE jedoch für die eigene Nutzdatenübertragung in Aufwärtsrichtung UL ebenfalls Ressourceneinheiten in den Zeitschlitzen ts0, ts6 und ts12 von dem Scheduler in der Basisstation NB zugewiesen wurden, stünden für Bestätigungssignalisierungen lediglich die Zeitschlitze ts3 und ts9 zur Verfügung. Dies bedeutete jedoch, dass das Teilnehmerendgerät UE nicht zeitlich disjunkt zu der Übertragung von Nutzdaten in Aufwärtsrichtung UL in jedem dieser Zeitschlitze Zeitschlitz eine Bestätigungssignalisierung durchführen könnte. Das ARQ-Protokoll kann entsprechend nicht von dem Teilnehmerendgerät UE unterstützt werden.

Bei der siebten beispielhaften Zuweisung G löst der Scheduler in der Basisstation NB die unbefriedigende Situation der Zuweisung F in der Weise, dass anstelle einer Zuweisung von Ressourceneinheiten RU in jedem der Zeitschlitze ts0...ts12 nur in den Zeitschlitzen ts0, ts6 und ts12 Ressourceneinheiten zugewiesen werden, als Ausgleich für die hierdurch entstehende geringere Übertragungskapazität jedoch ergänzend in den Zeitschlitzen ts0 und ts6 Ressourceneinheiten in benachbarten Unterfrequenzbändern 85-96 zugewiesen werden. Somit kann das Teilnehmerendgerät UE bei gleicher Ressourcenzuweisung für die Aufwärtsrichtung UL wie in der Zuweisung F in den Zeitschlitzen ts3 und t9 jeweils Bestätigungen für die in den Zeitschlitzen ts0 und ts6 in Abwärtsrichtung DL von der Basisstation NB empfangenen Nutzdaten signalisieren, ohne die zeitliche Disjunktheit der Steuerungssignalisierungen zu den Nutzdatenübertragungen in Aufwärtsrichtung UL aufzugeben. In gleicher Weise kann der Scheduler auch verfahren, wenn ergänzend oder alternativ auch dem Teilnehmerendgerät UE in jedem der Zeitschlitze ts0...ts12 Ressourceneinheiten für die Nutzdatenübertragung zugewiesen werden müssten. Voraussetzung ist jedoch in jedem Fall, dass in weiteren Unterfrequenzbändern ausreichend Ressourcen zur alternativen Nutzung zur Verfügung stehen. Ob benachbarte Frequenzbänder zur Erweiterung des Übertragungskapazität zur Verfügung stehen, ermittelt der Scheduler anhand der von dem Teilnehmerendgerät ermittelten Kanalqualitätsindikatoren. Sofern eine ausreichende Anzahl benachbarter Unterfrequenzbänder zur Belegung durch Ressourceneinheiten zur Verfügung steht, wird eine gewünschte bzw. erforderliche Anzahl Unterfrequenzbänder bzw. Ressourceneinheiten dem Teilnehmerendgerät UE zugewiesen.

Ist eine solche alternative Zuweisung von Ressourceneinheiten in weiteren Unterfrequenzbändern nicht möglich, so wird von der so genannten Außenband-Signalisierung mit einer zeitlich disjunkten Übertragung von Steuerungssignalisierungen zu einer Inband-Signalisierung gewechselt, wie sie beispielhaft in der Zuweisung H dargestellt ist. Steuerungssignalisierungen werden dann, wie zu der Zuweisung E in FIG 2 beschrieben, gemeinsam mit Nutzdaten in den zugewiesenen Ressourceneinheiten übertragen.

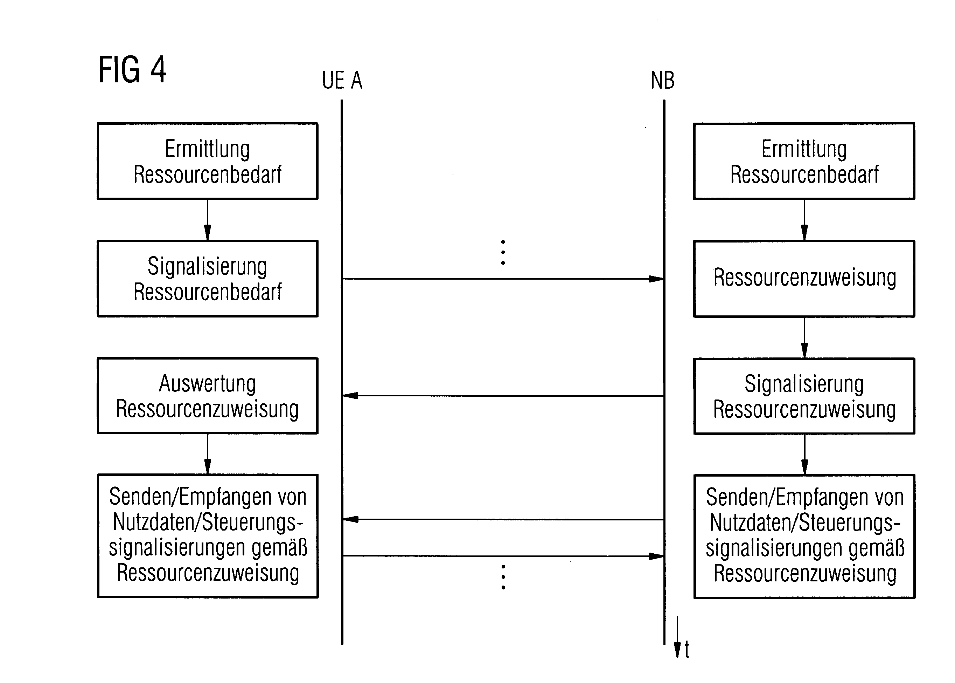

In der FIG 4 ist schließlich Bezug nehmend auf FIG 1 ein beispielhaftes Ablaufdiagramm nach der Zeit t dargestellt. Sowohl auf Seiten des Teilnehmerendgerätes UE A als auch der Basisstation NB wird, beispielsweise periodisch, ein Bedarf von Ressourcen für die Übertragung von Nutzdaten sowie Steuerungssignalisierungen auf der Funkschnittstelle ermittelt. Der Bedarf auf Seiten des Teilnehmerendgerätes UE A kann beispielsweise anhand eine Füllgrades eines Speichers und in Kenntnis eines Dienstes, in dem Nutzdaten übertragen werden sollen, ermittelt werden. Seitens der Basisstation NB kann der Bedarf ebenfalls anhand eines Füllgrades eines Speichers, beispielsweise jedoch auch anhand von anderen Komponenten des Systems empfangener Anforderungen zum Aufbau einer vorgegebenen Übertragungskapazität bestimmt werden. Das Teilnehmerendgerät UE A signalisiert den ermittelten Bedarf mittels eines Signalisierungskanals zu der Basisstation NB. Die Steuereinrichtung bzw. der Scheduler in der Basisstation NB führt auf Basis der Kenntnis des jeweiligen Bedarfs auf Seiten des Teilnehmerendgerätes UE A und der Basisstation NB eine Zuweisung von Ressourcen für Übertragungen von Nutzdaten und Steuerungssignalisierungen durch. Im Sinne der vorstehenden Beschreibung ist es dabei das vorrangige Ziel, die Ressourcen bzw. Ressourceneinheiten derart zuzuweisen, dass Nutzdaten und Steuerungssignalisierungen in Aufwärtsrichtung in zeitlich disjunkten Ressourcen übertragen werden. Nur, wenn dies aufgrund der zur Verfügung stehenden Ressourcen bzw. des Bedarfs nicht mehr möglich ist, wird seitens der Basisstation NB von einer Außenband- zu einer Inband-Signalisierung gewechselt. Die Ressourcenzuweisung wird in einem nächsten Schritt dem Teilnehmerendgerät UE A signalisiert, woraufhin sowohl Teilnehmerendgerät UE A als auch Basisstation NB die zugewiesenen Ressourcen für die Übertragung von Nutzdaten und Steuerungssignalisierungen nutzen.

## Patentansprüche

1. Verfahren zur Übertragung von Steuerungssignalisierungen (osig,isig) und Nutzdaten (nd) in Aufwärtsrichtung (UL) von einem Teilnehmerendgerät (UE) zu einer Basisstation (NB) in einer Anzahl von Unterfrequenzbändern eines Frequenzbandes in einem Funk-Kommunikationssystem, bei dem
die Steuerungssignalisierungen (osig,isig) abhängig von einer für die Übertragung von Nutzdaten (nd) zugewiesenen Anzahl Ressourceneinheiten (RU), welche aus einer Mehrzahl von Unterfrequenzbändern und einer Anzahl von Zeitschlitzen eines Zeitrahmens bestehen, in zumindest einem zu der zugewiesenen Anzahl Zeitschlitze für die Übertragung von Nutzdaten (nd) disjunkten Zeitschlitz des Zeitrahmens oder in zumindest einem Teil der für die Übertragung von Nutzdaten (nd) zugewiesenen Anzahl Ressourceneinheiten (RU) übertragen werden.

2. Verfahren nach Anspruch 1, bei dem
die Steuerungssignalisierungen (osig,isig) für den Fall der Übertragung in dem zumindest einen disjunkten Zeitschlitz in zumindest einem von der Mehrzahl Unterfrequenzbänder der zugewiesenen Anzahl Ressourceneinheiten (RU) für die Übertragung von Nutzdaten (nd) disjunkten Unterfrequenzband des Frequenzbandes und/oder in zumindest einem Teil der Mehrzahl Unterfrequenzbänder der zugewiesenen Anzahl Ressourceneinheiten (RU) für die Übertragung der Nutzdaten übertragen werden.

3. Verfahren nach Anspruch 1 oder 2, wobei
für die Übertragung der Steuerungssignalisierungen (osig,isig) sowohl die Zuweisung von Ressourceneinheiten (RU) für die Übertragung in Aufwärtsrichtung (UL) als auch für die Abwärtsrichtung (DL) berücksichtigt wird.

4. Verfahren nach einem vorstehenden Anspruch, wobei
von der Basisstation (NB) des Funk-Kommunikationssystems die Zuweisung von Ressourceneinheiten (RU) für die Übertragung von Nutzdaten (nd) in Abwärtsrichtung (DL) und/oder Aufwärtsrichtung (UL) derart erfolgt, dass die zeitlich disjunkte Übertragung der Steuerungssignalisierungen (osig,isig) ermöglicht wird.

5. Verfahren nach einem vorstehenden Anspruch, bei dem
die Steuerungssignalisierungen (osig,isig) zumindest für die Übertragung von Bestätigungssignalisierungen in Aufwärtsrichtung (UL) für von der Basisstation (NB) empfangenen Nutzdaten (nd) verwendet werden.

6. Basisstation (NB) eines Funk-Kommunikationssystems, aufweisend zumindest
eine Einrichtung (ST) zum Zuweisen einer Anzahl Ressourceneinheiten (RU), welche aus einer Mehrzahl von Unterfrequenzbändern und einer Anzahl von Zeitschlitzen eines Zeitrahmens bestehen, für eine Übertragung von Nutzdaten (nd) und zum Zuweisen zumindest eines zu der zugewiesenen Anzahl Zeitschlitze für die Übertragung von Nutzdaten (nd) disjunkten Zeitschlitz des Zeitrahmens oder zumindest eines Teils der für die Übertragung von Nutzdaten (nd) zugewiesenen Anzahl Ressourceneinheiten (RU) für eine Übertragung von Steuerungssignalisierungen (osig,isig) abhängig von einer für die Übertragung von Nutzdaten (nd) zugewiesenen Anzahl Ressourceneinheiten (RU), und
eine Einrichtung (SEE) zum Senden der Zuweisung zu dem Teilnehmerendgerät (UE) und zum Empfangen von dem Teilnehmerendgerät (UE) in Aufwärtsrichtung (UL) gesendeter Steuerungssignalisierungen (osig, isig) und Nutzdaten (nd).

7. Teilnehmerendgerät (UE), aufweisend zumindest
eine Einrichtung (SEE) zum Empfangen einer von einer Basisstation (NB) eines Funk-Kommunikationssystems signalisierten Zuweisung einer Anzahl Ressourceneinheiten (RU), welche aus einer Mehrzahl von Unterfrequenzbändern und einer Anzahl von Zeitschlitzen eines Zeitrahmens bestehen, für eine Übertragung von Nutzdaten (nd) und zumindest eines zu der zugewiesenen Anzahl Zeitschlitze für die Übertragung von Nutzdaten (nd) disjunkten Zeitschlitz des Zeitrahmens oder zumindest eines Teils der für die Übertragung von Nutzdaten (nd) zugewiesenen Anzahl Ressourceneinheiten (RU) für eine Übertragung von Steuerungssignalisierungen (osig,isig), wobei die Basisstation (NB) eine Wahl der Ressourcen für die Übertragung von Steuerungssignalisierungen (osig,isig) abhängig von einer für die Übertragung von Nutzdaten (nd) zugewiesenen Anzahl Ressourceneinheiten (RU) trifft,
eine Einrichtung (SEE) zum Auswerten der empfangenen Zuweisungen, und
eine Einrichtung (SEE) zum Senden von Steuerungssignalisierungen (osig,isig) und Nutzdaten (nd) in Aufwärtsrichtung (UL) zu der Basisstation (NB) in den zugewiesenen Ressourcen.
